# EUROPEAN PATENT APPLICATION

(11) **EP 4 844 670 A1**
(43) Date of publication of application: **25.11.2026**
(21) Application number: 25221771.6
(22) Date of filing: 09.12.2025
(51) Int. Cl.: G06T 5/60, G06T 5/70

(54) **METHOD AND APPARATUS WITH DEFECT PATTERN SIMILARITY DETECTION**

(30) Priority: 21.05.2025 KR 20250066301
(71) Applicant: SAMSUNG ELECTRONICS CO., LTD., Yeongtong-gu Suwon-si, Gyeonggi-do 16677 (KR)
(72) Inventor: Kang, Kyoungwon, 16677 Suwon-si, Gyeonggi-do (KR); Kim, Junghee, 16677 Suwon-si, Gyeonggi-do (KR); Yoo, Dong-Gun, 16677 Suwon-si, Gyeonggi-do (KR); Lee, Sunjae, 16677 Suwon-si, Gyeonggi-do (KR); Jo, Sunyoung, 16677 Suwon-si, Gyeonggi-do (KR); Hwang, Chanwook, 16677 Suwon-si, Gyeonggi-do (KR)
(74) Representative: Grünecker Patent- und Rechtsanwälte PartG mbB

(57) **Abstract**

A processor-implemented method including obtaining, for each type of defect types, first map image data representing whether a plurality of unit components are defective based on information on an object including the plurality of unit components, obtaining second map image data by preprocessing the first map image data using a denoising level determined based on a defect rate of the plurality of unit components for each of the defect types, and training, based on input data including the second map image data, a first artificial intelligence model based on a first reconstruction loss between output data of the first artificial intelligence model and the input data.

## Description

### BACKGROUND

### 1. Field of the Invention

The present disclosure relates to an electronic device and methods with artificial intelligence model training and defect pattern similarity detection.

### 2. Description of the Related Art

Diverse defect patterns may occur at each stage for product manufacturing processes. In particular, in the case of products manufactured in small quantities with multiple varieties, more diverse defect patterns may occur. Accordingly, there is a recognized desire for developing technology to identify a cause of a defect early in the manufacturing process by analyzing a defect pattern of a product and to thereby enhance the quality of those products.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is what is claimed in the independent claims. Preferred embodiments are specified in the dependent claims.

In a general aspect, here is provided a processor-implemented method including obtaining, for each type of defect types, first map image data representing whether a plurality of unit components are defective based on information on an object including the plurality of unit components, obtaining second map image data by preprocessing the first map image data using a denoising level determined based on a defect rate of the plurality of unit components for each of the defect types, and training, based on input data including the second map image data, a first artificial intelligence model based on a first reconstruction loss between output data of the first artificial intelligence model and the input data.

The obtaining of the second map image data may include determining one or more of a threshold value and a size of a reference area based on the defect rate and preprocessing the first map image data by using one or more of the threshold value and the reference area having the determined size.

The second map image data may include a virtual boundary line representing an area corresponding to an edge of the object.

The second map image data may include relative position information between the virtual boundary line and a defect pattern included in the second map image data.

The training of the first artificial intelligence model may include extracting a plurality of first patch image data from the second map image data, generating a first embedding vector of each of the plurality of first patch image data by using an encoder included in the first artificial intelligence model, the encoder using the plurality of first patch image data as the input data, and obtaining, as the output data, a plurality of second patch image data corresponding to the plurality of first patch image data from the first embedding vector by using a decoder included in the first artificial intelligence model.

The obtaining of the plurality of second patch image data may include generating a second embedding vector by masking a portion of the first embedding vector of each of the plurality of first patch image data based on a masking ratio determined according to the defect rate and reconstructing the plurality of second patch image data from the second embedding vector by using the decoder.

The training of the first artificial intelligence model may include identifying one or more third patch image data corresponding to the masked first embedding vector among the plurality of first patch image data, identifying one or more fourth patch image data corresponding to the masked first embedding vector among the plurality of second patch image data, and training the first artificial intelligence model to minimize the first reconstruction loss between the input data including the one or more third patch image data and the output data including the one or more fourth image data.

The training of the first artificial intelligence model may include extracting an encoder included in the first artificial intelligence model into a second artificial intelligence model when a second reconstruction loss calculated from the first artificial intelligence model based on test data is less than a set value.

The training of the first artificial intelligence model may include stopping the training of the first artificial intelligence model when an epoch, in which the second reconstruction loss calculated from the first artificial intelligence model based on the test data is equal to or greater than a set value, satisfies a set condition.

The information may include identification information on the object, inspection result information of a plurality of inspection processes performed for each of the plurality of unit components, coordinate information of the plurality of unit components, and defect information of the plurality of unit components for each of the defect types and the defect types may be determined based on the inspection result information for each of the plurality of unit components.

In a general aspect, here is provided a non-transitory computer-readable storage medium storing instructions that, when executed by a processor, cause the processor to perform the method.

In a general aspect, here is provided a processor-implement method including identifying a target object among a plurality of objects and a target defect type of the target object based on an object defect rate of each of defect types of the plurality of objects, identifying a plurality of candidate objects based on a target defect rate of the target defect type corresponding to the target object, obtaining a first vector of the target object and a second vector of each of the plurality of candidate objects generated from a trained artificial intelligence model, and determining a similarity between a defect pattern of the target object and a defect pattern of each of the plurality of candidate objects based on a first similarity between the first vector and the second vector.

The identifying of the plurality of candidate objects may include identifying the plurality of candidate objects of which a defect type is identical to the target defect type of the target object and the object defect rate is within a set range from the target defect rate of the target defect type corresponding to the target object.

The set range is determined based on the target defect rate.

The trained artificial intelligence model may, by using a plurality of patch image data extracted from map image data corresponding to the target defect type of the target object as an input, output the first vector, the first vector including a plurality of embedding vectors.

The determining of the similarity may include generating, responsive to the target object and the plurality of candidate objects being separated into a plurality of areas, a first defect rate vector that includes a defect rate of each of the plurality of areas of the target object and a plurality of second defect rate vectors that include a defect rate of each of the plurality of areas of the plurality of candidate objects and determining the similarity based on the first similarity and a second similarity between the first defect rate vector and the plurality of second defect rate vectors.

The determining of the similarity may include determining whether respective defect patterns of one or more candidate objects having a respective similarity value being greater than a set value among the plurality of candidate objects and the defect pattern of the target object are similar.

The method may include identifying a process, the process being a cause of the defect pattern of the target object, based on process information of the one or more candidate objects and process information of the target object.

The method may include classifying, based on the similarity, the defect pattern of the target object to a defect pattern of any one candidate object among the plurality of candidate objects or to a new defect pattern.

In a general aspect, here is provided an electronic device including one or more processors including processing circuitry and a memory including one or more storage media storing instructions that, when executed individually or collectively by the one or more processors, cause the electronic device to obtain, for each type of defect types, first map image data representing whether a plurality of unit components are defective based on information on an object including the plurality of unit components, obtain second map image data by preprocessing the first map image data using a denoising level determined based on a defect rate of the plurality of unit components for each of defect patterns, and train, based on input data including the second map image data, a first artificial intelligence model based on first reconstruction loss between output data of the first artificial intelligence model and the input data.

The effects of the invention are not limited to those described above, and other effects not explicitly described may be clearly understood by those skilled in the art from the scope of the claims.

### BRIEF DESCRIPTION OF THE FIGURES

FIG. 1 illustrates an example electronic device according to one or more embodiments.
FIG. 2 illustrates an example method with artificial intelligence model training according to one or more embodiments.
FIG. 3 illustrates an example method with first map image data preprocessing using a denoising level according to one or more embodiments.
FIG. 4 illustrates example first map image data and second map image data according to one or more embodiments.
FIG. 5 illustrates an example method with artificial intelligence model training according to one or more embodiments.
FIG. 6 illustrates an example process with artificial intelligence model training according to one or more embodiments.
FIG. 7 illustrates an example method with defect pattern similarity detection using a trained artificial intelligence model according to one or more embodiments.
FIG. 8 illustrates an example object separated into a plurality of areas according to one or more embodiments.
FIG. 9 illustrates example candidate objects with a defect pattern similar to a defect pattern of a target object according to one or more embodiments.
FIG. 10 illustrates example composite map image data according to one or more embodiments.
FIG. 11 illustrates an example process with detecting defect pattern causes according to one or more embodiments.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example", "embodiment", and "example embodiment" herein have a same meaning (e.g., the phrasing 'in an or one example' has a same meaning as 'in an or one embodiment" and 'in an or one example embodiment'), and "one or more examples" has a same meaning as "one or more embodiments" and "one or more example embodiments". Still further, each of multiple or all separately described an/one "example", "embodiment", "example embodiment", as well as "examples", "embodiments", "example embodiments", herein may be included, in combination, in a same embodiment in any combination.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

As used in connection with various example embodiments of the disclosure, any use of the terms "module" or "unit" means hardware and/or processing hardware configured to implement software and/or firmware to configure such processing hardware to perform corresponding operations, and may interchangeably be used with other terms, for example, "logic," "logic block," "part," or "circuitry". As one non-limiting example, an application-predetermined integrated circuit (ASIC) may be referred to as an application-predetermined integrated module. As another non-limiting example, a field-programmable gate array (FPGA) or an application-specific integrated circuit (ASIC) may be respectively referred to as a field-programmable gate unit or an application-specific integrated unit. In a non-limiting example, such software may include components such as software components, object-oriented software components, class components, and may include processor task components, processes, functions, attributes, procedures, subroutines, segments of the software. Software may further include program code, drivers, firmware, microcode, circuits, data, database, data structures, tables, arrays, and variables. In another non-limiting example, such software may be executed by one or more central processing units (CPUs) of an electronic device or secure multimedia card.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

Unless otherwise defined, all terms, including technical and scientific terms, used herein have the same meaning as commonly understood by one of ordinary skill in the art to which this disclosure pertains and specifically in the context on an understanding of the disclosure of the present application. Terms, such as those defined in commonly used dictionaries, are to be interpreted as having a meaning that is consistent with their meaning in the context of the relevant art and specifically in the context of the disclosure of the present application, and are not to be interpreted in an idealized or overly formal sense unless expressly so defined herein.

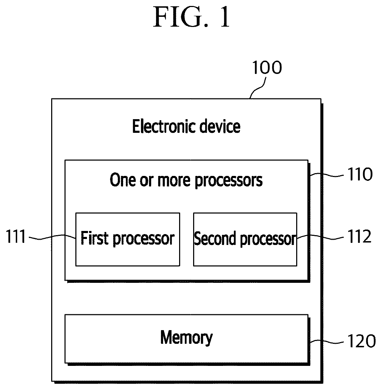

FIG. 1 illustrates an example electronic device according to one or more embodiments.

Referring to FIG. 1, in a non-limiting example, an electronic device 100 may include one or more processors 110 and a memory 120. According to the electronic device 100 illustrated in FIG. 1, only components related to the example embodiment are illustrated. Accordingly, it will be understood by those skilled in the art that, in addition to the components illustrated in FIG. 1, other general-purpose components may also be included.

The one or more processors 110 may control overall operations of the electronic device 100. The one or more processors 110 may include at least one hardware unit. In addition, the one or more processors 110 may be operated by one or more software modules generated by executing one or more instructions stored in the memory 120. The one or more processors 110 may control example embodiments performed by the electronic device 100 through interaction with the memory 120 and components that may be further included in the electronic device 100.

The one or more processors 110 may include a first processor 111 and a second processor 112. The one or more processors 110 may be configured to execute programs or applications to configure the one or more processors 110 to control the electronic apparatus 100 to perform one or more or all operations and/or methods involving the detection of defect pattern similarities, and may include any one or a combination of two or more of, for example, a central processing unit (CPU), an application processor (AP), and a digital signal processor (DSP), graphics processors such as a graphics processing unit (GPU) and a vision processing unit (VPU), artificial intelligence processors such as a neural processing unit (NPU) and a tensor processing unit (TPU), or other types of processors. For example, the first processor 111 may be the CPU, and the second processor 112 may be at least one of the GPU or NPU, but is not limited thereto. Example operations for methods with artificial intelligence model training and defect pattern similarity detection that may use the trained artificial intelligence model may be performed by any one processor of the first processor 111 and the second processor 112 which may be physically separate. Or, unlike in FIG. 1, the first processor 111 and the second processor 112 may be an identical processor, and such a case may also fall within the scope of the present specification. In this case, the example methods may be performed by a single processor.

In an example, the first processor 111 may perform a preprocessing task before training an artificial intelligence model or determining a similarity of defect patterns using the trained artificial intelligence model. More specifically, the first processor 111 may obtain, for each of defect types, first map image data representing whether a plurality of unit components are defective based on information on an object including the plurality of unit components, and obtain second map image data by preprocessing the first map image data using a denoising level determined based on a defect rate of the plurality of unit components for each of the defect types. Manufacturing processes may create or manufacture objects and the object may be, for example, a wafer, and each of the plurality of unit components may be a chip, but examples are not limited thereto. In addition, the information on the object may include identification information on the object, inspection result information of a plurality of inspection processes performed for each of the plurality of unit components, coordinate information of the plurality of unit components, and defect information of the plurality of unit components for each of the defect types. However, examples are not limited thereto. The information on the object may also include other information such as information on a performance time of a test including the plurality of inspection processes.

In an example, when manufacturing of the unit components is finished, the test including the plurality of inspection processes for the unit components may be performed. Here, the test may be an electrical die sorting (EDS) test for sorting a defect by inspecting electrical characteristics, but is not limited thereto. When the test including the plurality of inspection processes is performed for a chip, inspection result information of the plurality of inspection processes may be generated. Each piece of inspection result information of the plurality of inspection processes may represent success or failure. Here, chips with identical inspection result information may be classified as an identical defect type. The plurality of inspection processes are sequentially performed according to a first method in which the processes continue to be executed when a defect occurs. For example, when there are a total of five inspection processes, defect types of the chips may be up to "31". In addition, the first map image data obtained corresponding to the object may include up to 31 defect types. However, the plurality of inspection processes are not limited to a procedure by the first method, and may be performed by various methods such as a second method of stopping when a defect occurs.

A specific unit component may be represented as defective in first map image data of a defect type corresponding to the inspection result information of the plurality of inspection processes, and may be represented as normal in first map image data of another defect type. The electronic device 100 may obtain first map image data of various defect types for the object based on the inspection result information on the plurality of unit components included in the object.

In an example, the first map image data may be image data representing whether the plurality of unit components for one defect type among the defect types are defective. Here, a value of each pixel included in the first map image data may represent whether a unit component at a corresponding position is defective. Unlike the first map image data, second map image data may be map image data representing a degree of defectiveness. That is, the electronic device 100 may generate second map image data, in which a defect pattern is emphasized more, by preprocessing the first map image data using a denoising level.

In an example, the second processor 112 may perform an operation of training an artificial intelligence model, or determining a similarity of defect patterns by using the trained artificial intelligence model. As an example, the second processor 112 may train, when input data based on the second map image data is input into a first artificial intelligence model, the first artificial intelligence model based on first reconstruction loss between output data of the first artificial intelligence model and the input data. As another example, the second processor 112 may identify a target object among a plurality of objects and a target defect type of the target object based on a defect rate for each of defect types of the plurality of objects included in a group, check a plurality of candidate objects based on a defect rate of the target defect type corresponding to the target object, obtain a first vector of the target object and a second vector of each of the plurality of candidate objects based on the trained artificial intelligence model, and determine a similarity between a defect pattern of the target object and a defect pattern of each of the plurality of candidate objects based on a first similarity between the first vector and the second vector. Detailed descriptions of the operation of training an artificial intelligence model and the operation of determining a similarity of defect patterns using the trained artificial intelligence model will be provided in greater detail below.

The memory 120 may include computer-readable instructions. The one or more processors 110 may be configured to execute computer-readable instructions, such as those stored in the memory 120, and through execution of the computer-readable instructions, the one or more processors 110 may be configured to perform one or more, or any combination, of the operations and/or methods described herein. The memory 120 may be referred to as a storage, and may be a volatile memory or non-volatile memory. The memory 120 may store various information for performing the artificial intelligence model training method and the method of determining a similarity of defect patterns using the trained artificial intelligence model. For example, in the memory 120, information on an artificial intelligence model and information on an object may be stored. In addition, in the memory 120, analysis information on a defect pattern of a target object may also be stored.

In addition, while not illustrated in FIG. 1, the electronic device 100 may further include a transceiver (not illustrated). The transceiver is a device for performing wired or wireless communication, and is capable of communicating with an external electronic device. Here, the external electronic device may be a device for providing an operator with various analysis information on a defect pattern generated by the electronic device 100, but is not limited thereto. Communication technologies used by the transceiver may include a global system for mobile communication (GSM), code division multiple access (CDMA), long term evolution (LTE), 5G, wireless LAN (WLAN), wireless fidelity (Wi-Fi), Bluetooth, radio frequency identification (RFID), infrared data association (IrDA), ZigBee, and near field communication (NFC).

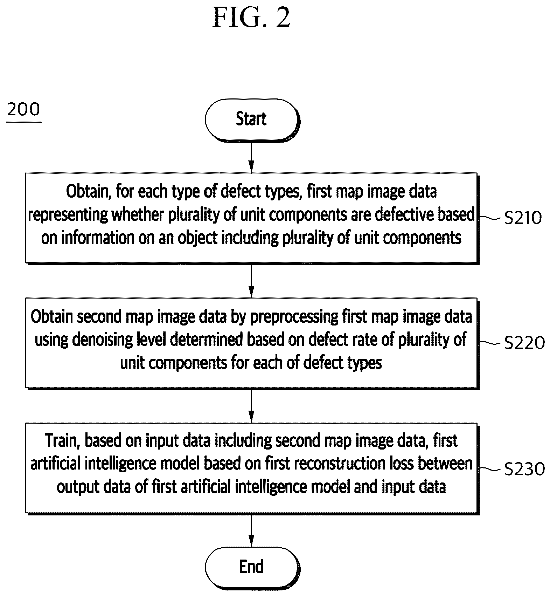

FIG. 2 illustrates an example method with artificial intelligence model training according to one or more embodiments.

Referring to FIG. 2, it may be understood that each operation of an artificial intelligence model training method performed by an electronic device (e.g., electronic device 100) may be modified, substituted, or have their order changed, as long as such modifications fall within the scope clearly understood by a person skilled in the art.

Referring to FIG. 2, in a non-limiting example, a method 200 may include operation S210, in which an electronic device (e.g., electronic device 100 of FIG. 1) may obtain, for each type of defect types, first map image data representing whether a plurality of unit components are defective based on information on an object including the plurality of unit components. For example, a defective unit component may be represented in the first map image data, and a normal unit component may not be represented in the first map image data.

In an example, before a preprocessing task in operation S220, an electronic device (e.g., he electronic device 100) may perform a task of refining the first map image data, the first map image data being raw data, earlier. In relation to this, the task of refining the first map image data may be performed to emphasize a defect pattern in advance that may be deleted by the preprocessing task based on a denoising level. For example, the electronic device may adjust determining whether a specific unit component is defective based on whether adjacent unit components, positioned around the specific unit component, are defective. Whether the specific unit component is defective may be adjusted based on the number of defective unit components among eight adjacent unit components positioned in a plurality of directions (for example, 0°, 45°, 90°, 135°, 180°, 225°, 270°, and 315°) with reference to the specific unit component. More specifically, the specific unit component may change from defective to normal or from normal to defective, based on the number of defective unit components among the adjacent unit components. That is, since a portion corresponding to noise is deleted or an empty portion of a defect pattern is filled as defectiveness is adjusted, the defect pattern of the first map image data may become apparent.

In an example, the electronic device may map and store, with the obtained first map image data, identification information on the object, information on the defect types, information on the number of unit components corresponding to the defect types, and information on a defect rate in a memory (e.g., memory 120 of FIG. 1). Accordingly, when a task of searching for first map image data (for example, searching for first map image data having a specific defect type) is performed thereafter, the information mapped with the first map image data may be used as an index.

In an example, in operation S220, the electronic device (e.g., electronic device 100) may obtain second map image data by preprocessing the first map image data using a denoising level determined based on a defect rate of a plurality of unit components for each of the defect types. For each of the defect types, the denoising level based on the defect rate may be determined. Here, a defect rate of a specific defect type may be a ratio of unit components having the specific defect type among the plurality of unit components.

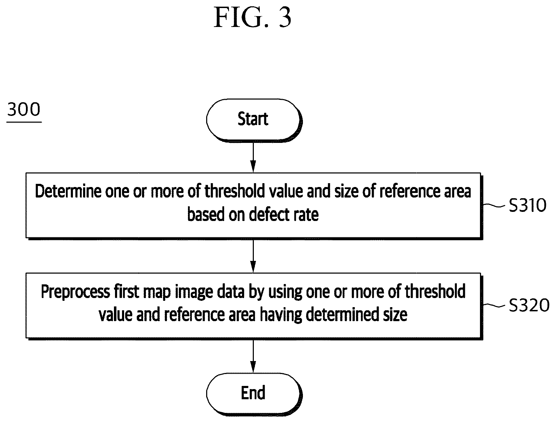

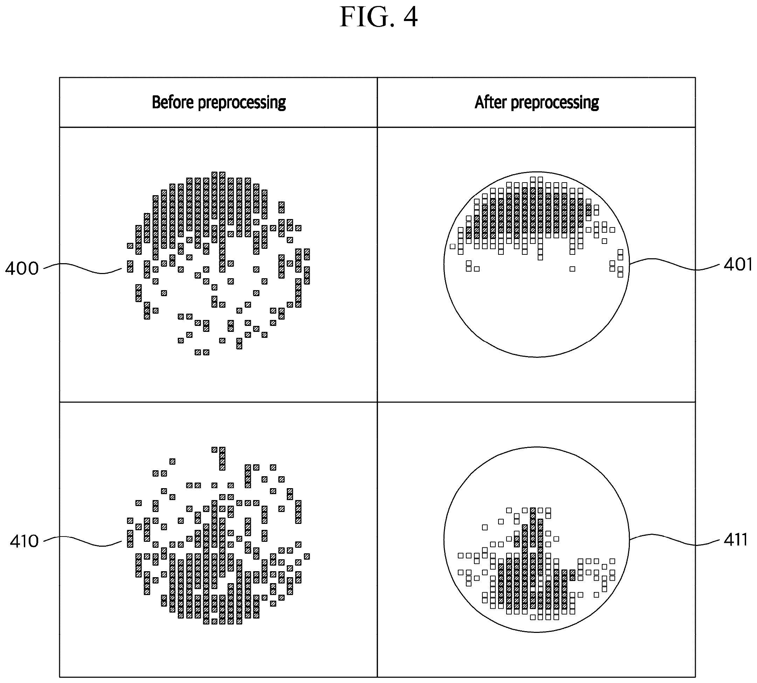

When the denoising level is set high despite a low defect rate, a defect pattern in map image data may disappear. Conversely, when the denoising level is set low despite a high defect rate, the defect pattern may not be revealed clearly. That is, when the electronic device preprocesses the first map image data by using the denoising level determined based on the defect rate, the defect pattern in the first map image data may be clearly revealed while a main portion of the defect pattern in the first map image data may also be preserved. Detailed descriptions of an operation of the preprocessing will be provided in greater detail below with reference to FIG. 3 and FIG. 4.

In an example, in operation of S230, the electronic device (e.g., electronic device 100) may train, based on input data including the second map image data, a first artificial intelligence model based on a first reconstruction loss between output data of the first artificial intelligence model and the input data. Here, the first artificial intelligence model may be an artificial intelligence model that has an encoder-decoder structure. A training operation of the first artificial intelligence model may be divided into a first stage of training the first artificial intelligence model based on training data, and a second stage of validating the first artificial intelligence model based on test data. In relation to this, reconstruction loss in the stage of training the first artificial intelligence model may be referred to as first reconstruction loss, and reconstruction loss in the stage of validating the first artificial intelligence model may be referred to as second reconstruction loss.

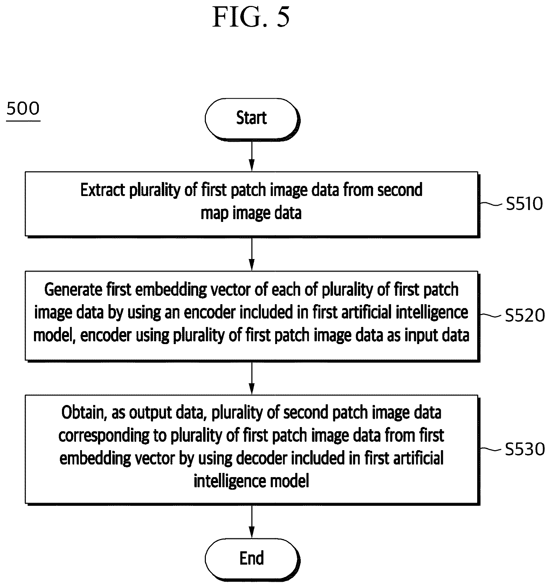

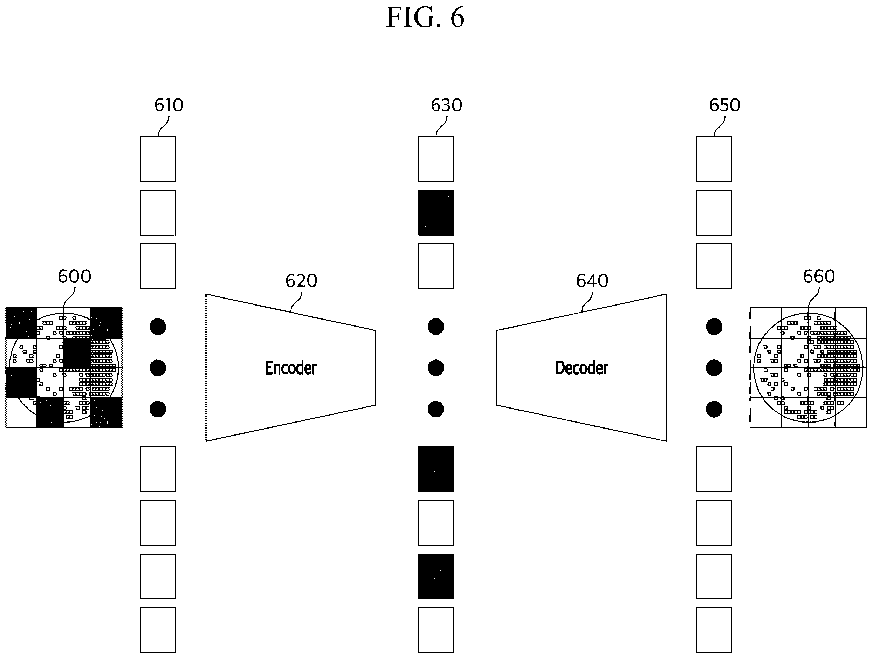

When an epoch for the first artificial intelligence model is finished, the second stage for validating performance of the first artificial intelligence model may be performed. More specifically, based on the test data, the electronic device may validate the performance of the first artificial intelligence model by comparing the second reconstruction loss, calculated from the trained first artificial intelligence model, with a set value. As an example, when the second reconstruction loss calculated from the trained first artificial intelligence model is less than a set value corresponding to reconstruction loss calculated from a current version of the first artificial intelligence model stored in the memory, the electronic device may determine that the performance of the first artificial intelligence model is enhanced. Here, the electronic device may update, in the memory, information on a second artificial intelligence model corresponding to an encoder included in the first artificial intelligence model. Thereafter, when the electronic device performs a method of determining a similarity of defect patterns, the updated second artificial intelligence model may be used. As another example, when the second reconstruction loss is equal to or greater than the set value corresponding to the reconstruction loss calculated from the first artificial intelligence model, the electronic device may determine that the performance of the first artificial intelligence model is not enhanced, and perform a following task. Here, the following task may include a task of determining whether to perform early stopping or determining whether a set condition is satisfied, such as determining whether a maximum number of epochs is exceeded. Detailed descriptions of a method of training the first artificial intelligence model will be provided in greater detail below with reference to FIG. 5 and FIG. 6.

FIG. 3 illustrates an example method with first map image data preprocessing using a denoising level according to one or more embodiments. In FIG. 3, a preprocessing method for first map image data for one specific defect type (hereinafter referred to as a specific defect type) among defect types of an object will be primarily described. For other defect types other than the specific defect type, the preprocessing method illustrated in FIG. 3 may be applied equally.

Referring to FIG. 3, in a non-limiting example, in method 300, a preprocessing task may include a plurality of preprocessing tasks performed sequentially. For example, the preprocessing task may include a first preprocessing task based on a value of a specific pixel and a threshold value, a second preprocessing task based on the value of the specific pixel and values of other adjacent pixels, and a third preprocessing task based on the value of the specific pixel and values of other pixels having a similar pattern. While the second preprocessing task and the third preprocessing task may be applied directly to first map image data that represents defectiveness in a binary manner, the first preprocessing task may be performed for map image data corresponding to a stopping stage of the preprocessing task after at least one of the second preprocessing task and the third preprocessing task is performed. Hereinafter, a method (e.g., method 300) of performing the plurality of preprocessing tasks based on a defect rate will be described in detail.

In an example, in operation S310, an electronic device (e.g., electronic device 100) may determine one or more of a threshold value and a size of a reference area based on the defect rate. As described above, the defect rate may be calculated as a ratio of unit components having a specific defect type among a plurality of unit components. Here, the threshold value determined based on the defect rate may be a value used when the first preprocessing task is performed. In addition, the size of the reference area determined based on the defect rate may be used to determine a range of adjacent pixels during the second preprocessing task. That is, the reference area may represent an area in which the second preprocessing task is performed.

In an example, determining at least one of the threshold value and the size of the reference area based on the defect rate may represent an optimization of a denoising level. As an example, since it may be appropriate that the denoising level is set low when the defect rate is low, the threshold value and the size of the reference area determined based on the defect rate may be set small. As another example, since it may be appropriate that the denoising level is set high when the defect rate is high, the threshold value and the size of the reference area determined based on the defect rate may be set largely.

In an example, in operation S320, the electronic device (e.g., electronic device100) may preprocess the first map image data by using one or more of the threshold value and the reference area having the determined size. As described above, the electronic device may perform the first preprocessing task after performing at least one of the second preprocessing task and the third preprocessing task earlier.

In an example, the second preprocessing task may be, as a preprocessing task on the basis of a Gaussian filter, a task of adjusting a value of a specific pixel based on the value of the specific pixel and values of adjacent pixels corresponding to the specific pixel. The electronic device may identify a pixel and adjacent pixels earlier included in the first map image data by using the reference area having the determined size in operation S310, and then adjust a value of the pixel based on the value of the pixel and values of the adjacent pixels corresponding to the pixel. For example, the electronic device may adjust the value of the pixel by a value (for example, an average value) derived based on the value of the pixel and the values of the adjacent pixels.

In an example, the third preprocessing task may be a task of adjusting the value of the specific pixel based on the value of the specific pixel and values of pixels having a similar value pattern. Here, since the pixels having the similar value pattern are not limited to the adjacent pixels of the specific pixel, the third preprocessing task may be a preprocessing task based on a non-local mean filter. For example, when a first value pattern of a reference area with respect to a first pixel and a second value pattern of a reference area with respect to a second pixel are similar, the first pixel and the second pixel may be classified as similar pixels. When pixels, other than the second pixel, showing a value pattern similar to that of the first pixel are identified, electronic devices may adjust a value of a corresponding pixel by a value (for example, an average value) derived based on values of the identified pixels.

In an example, the first preprocessing task may be a task of adjusting a value of each pixel of the first map image data by comparing the value of the specific pixel and the threshold value. A value of a pixel smaller than the threshold value may be adjusted to a set value (for example, "0").

Second map image data generated as the preprocessing task for the first map image data is performed may represent a degree of defectiveness of each of the plurality of unit components. More specifically, each pixel of the second map image data may represent a degree of defectiveness of a corresponding unit component. That is, a value of a pixel may be a real number within a set range (for example, [0, 1]), and a greater value of a pixel may indicate a more severe degree of defectiveness of a corresponding unit component. In relation to this, the degree of defectiveness of the plurality of unit components included in an object may be represented in different shades in the second map image data.

FIG. 4 illustrates example first map image data and second map image data according to one or more embodiments.

Referring to FIG. 4, in a non-limiting example, first map image data 400 and 410 may be image data that represents whether a plurality of unit components included in an object are defective in terms of a specific defect type. More specifically, a unit component identified as defective among the plurality of unit components may be represented by a shaded box on the first map image data 400 and 410. Conversely, a unit component that is not represented by the shaded box on the first map image data 400 and 410 may be a unit component identified as normal.

Second map image data 401 and 411 may be image data that represents a degree of defectiveness of the plurality of unit components included in the object. Unit components may be represented in different shades on the second map image data 401 and 411 according to the degree of defectiveness. For example, a unit component with a high degree of defectiveness may be represented by a shaded box on the second map image data 401 and 411, and a unit component with a low degree of defectiveness may be represented by an unshaded box on the second map image data 401 and 411. When compared to the first map image data 400 and 410, it may be observed that a defect pattern is more apparent by being emphasized in the second map image data after a preprocessing task.

In an example, the second map image data 401 and 411 may include a virtual boundary line representing an area corresponding to an edge of the object. The virtual boundary line may be determined based on coordinate information of the plurality of unit components included in the object. That is, the second map image data 401 and 411 may further include relative position information between the defect pattern included in the second map image data 401 and 411 and the virtual boundary line. Input data of a first artificial intelligence model may be a plurality of first patch image data extracted from the second map image data 401 and 411. That is, the first artificial intelligence model trained based on the input data including the relative position information may have consistent performance regardless of a size of an object. In particular, a non-memory semiconductor may be manufactured in small quantities with multiple varieties. According to an example, when a similarity is determined by using the trained first artificial intelligence model, an amount of resources being consumed may be greatly reduced, and a defect pattern of a non-memory semiconductor may be effectively classified and analyzed.

FIG. 5 illustrates an example method with artificial intelligence model training according to one or more embodiments.

Referring to FIG. 5, in a non-limiting example, method 500 may include operation S510 in which an electronic device (e.g., electronic device 100) may extract a plurality of first patch image data from second map image data. More specifically, the plurality of first patch image data may be generated by dividing the second map image data based on a set patch size (for example, 5 × 5), and a first artificial intelligence model may be a model trained to process patch image data having the set patch size, but is not limited thereto.

In an example, in operation S520, the electronic device (e.g., electronic device 100) may generate a first embedding vector of each of the plurality of first patch image data by using an encoder included in the first artificial intelligence model, the encoder using the plurality of first patch image data as input data. For example, the first patch image data may represent image data input into the encoder included in the first artificial intelligence model. The first embedding vector output through the encoder may be a feature vector obtained by compressing visual information (for example, information on a defect pattern) included in corresponding first patch image data.

In an example, in operation S530, the electronic device (e.g., electronic device 100) may obtain a plurality of second patch image data, as output data, corresponding to the plurality of first patch image data by using a decoder included in the first artificial intelligence model based on the first embedding vector. That is, the second patch image data, as patch image data output from the decoder, may be distinguished from the first patch image data.

In addition to a general image data augmentation method such as vertical/horizontal flipping and rotation of image data, an image data augmentation method through masking may also be applied. In relation to this, the electronic device may mask at least a portion of the first embedding vector of each of the plurality of first patch image data based on a masking ratio determined based on a defect rate. When the defect rate is low, a size of a defect pattern included in the second map image data may be small, and the number of patch image data including the defect pattern may also be low. Here, when the masking ratio is high, an embedding vector corresponding to the patch image data that includes the defect pattern is more likely to be masked, which increases a probability that the defect pattern in the patch image data output through the decoder may be lost. That is, it may be appropriate that the masking ratio is adaptively determined responsive to the defect rate. More specifically, the masking ratio may be set higher when the defect rate is higher and set lower when the defect rate is lower. Among a plurality of first embedding vectors corresponding to the plurality of first patch image data, an embedding vector to be masked may be randomly determined. For example, the masking of an embedding vector may involve replacing an element of the embedding vector with a random value, but is not limited thereto.

In an example, the electronic device (e.g., electronic device 100) may reconstruct the plurality of second patch image data by using the decoder that uses a second embedding vector as an input. Thereafter, the electronic device may train the first artificial intelligence model to minimize first reconstruction loss between the plurality of first patch image data input into the encoder and the plurality of second patch image data output from the decoder.

In an example, the electronic device (e.g., electronic device 100) may train the first artificial intelligence model to identify one or more third patch image data corresponding to the masked first embedding vector among the plurality of first patch image data, identify one or more fourth patch image data corresponding to the masked first embedding vector among the plurality of second patch image data, and minimize a first reconstruction loss between the one or more third patch image data and the one or more fourth patch image data. That is, the first artificial intelligence model may be trained to minimize first reconstruction loss between patch image data related to a masked embedding vector. Here, first patch image data corresponding to the masked embedding vector may be referred to as third patch image data, and the second patch image data corresponding to the masked embedding vector may be referred to as the fourth patch image data.

When the first artificial intelligence model is trained based on training data including the plurality of first patch image data extracted from the second patch image data for an object, the electronic device may perform a validation task of the first artificial intelligence model based on test data. Here, the test data may include data provided separately from the training data to prevent overfitting of the first artificial intelligence model.

In an example, the electronic device may determine, based on test data, whether to stop the training of the first artificial intelligence model by comparing second reconstruction loss, calculated from the trained first artificial intelligence model, with a set value. When a size of the test data is large, the test data may be divided into a unit of a batch size and input into the trained first artificial intelligence model. The second reconstruction loss may be calculated by an average value of calculated reconstruction loss. The set value is reconstruction loss calculated from a current version of the first artificial intelligence model stored in a memory (e.g., memory 120), and may be a reference value for determining whether the trained artificial intelligence model is enhanced. The batch size may be set based on hardware performance of the electronic device.

For example, when the second reconstruction loss is less than the set value, the trained first artificial intelligence model may be enhanced more than the current version of the first artificial intelligence model. Accordingly, the training of the first artificial intelligence model may be stopped and the encoder included in the trained first artificial intelligence model may be extracted into a second artificial intelligence model. In addition, the first artificial intelligence model including the second artificial intelligence model may also be stored in the memory as the latest version of an artificial intelligence model. Storing the first artificial intelligence model in the memory may involve mapping and storing, in addition to a parameter of the first artificial intelligence model, a set patch size, a size of map image data, and a depth and the number of heads of the first artificial intelligence model. Thereafter, when the validation task or a similarity determining method is performed by the electronic device, the latest version of the first artificial intelligence model and the latest version of the second artificial intelligence model may be used. For example, the second artificial intelligence model may be a vision transformer model, but is not limited thereto.

In an example, when the second reconstruction loss is equal to or greater than the set value, the trained first artificial intelligence model may not be enhanced (i.e., may not be a better version) compared to the current version of the first artificial intelligence model. Here, the training of the first artificial intelligence model may be stopped when a current epoch satisfies a set condition, and the training of the first artificial intelligence model may be restarted when the epoch does not satisfy the set condition. Here, the set condition may include a first condition of repeating an epoch a set number of times (for example, five times), in which the second reconstruction loss is calculated to be equal to or more than the set value, a second condition of repeating an epoch a set number of times (for example, 10 times), in which the second reconstruction loss is calculated within a range similar to the set value, a third condition in which a current epoch is equal to or greater than a maximum number of epochs (for example, 100 times), and a fourth condition of repeating an epoch a set number of times (for example, 15 times), in which the second reconstruction loss is calculated to be equal to or greater than the first reconstruction loss, but is not limited thereto. When the training of the first artificial intelligence model is restarted as the set condition is not satisfied, the first artificial intelligence model may be retrained further based on training data newly obtained after operation S530.

FIG. 6 illustrates an example process with artificial intelligence model training according to one or more embodiments.

Referring to FIG. 6, in a non-limiting example, an encoder 620 may use a plurality of first patch image data 610 extracted from second map image data 600 as inputs, and use a plurality of first embedding vectors as outputs. A decoder 640 may use, as inputs, a plurality of second embedding vectors 630 obtained as at least a portion of the plurality of first embedding vectors is embedded, and use the plurality of second patch image data 660 as outputs.

In an example, an element corresponding to a masked embedding vector may be represented by a shaded box, and in this example, a masking ratio may be 37.5%. A parameter of a first artificial intelligence model may be adjusted to minimize first reconstruction loss between one or more third patch image data represented by the shaded box among the plurality of first patch image data 610 and one or more corresponding fourth patch image data.

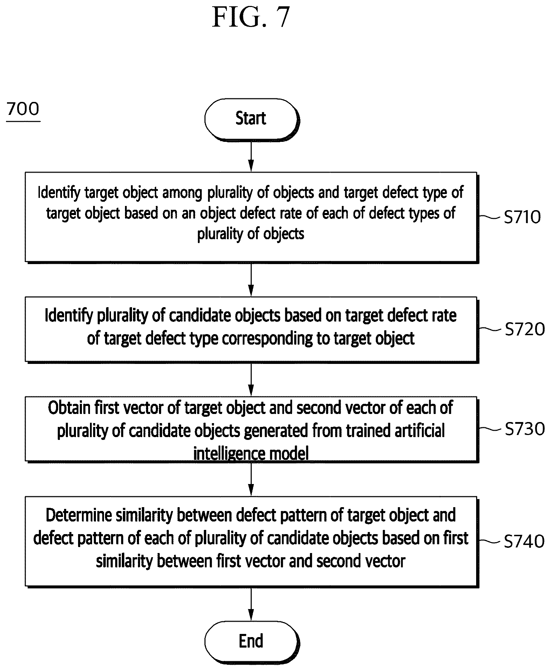

FIG. 7 illustrates an example method with defect pattern similarity detection using a trained artificial intelligence model according to one or more embodiments.

With respect to FIG. 7, it will be understood that each operation of a method of determining, by an electronic device, a similarity of defect patterns using an artificial intelligence model may be modified, substituted, or have their order changed, as long as such modifications fall within the scope clearly understood by a person skilled in the art. In an example, a trained artificial intelligence model described in FIG. 7 may be a second artificial intelligence model corresponding to the encoder 620 illustrated in FIG. 6.

Referring to FIG. 7, in a non-limiting example, in method 700, operation S710 may identify, by, for example, an electronic device (e.g., electronic device 100) a target object among a plurality of objects and a target defect type of the target object based on an object defect rate for each of defect types of a plurality of objects. For example, the plurality of objects may include an object on which a test, including a plurality of inspection processes, is performed within a first set period of time (for example, one day). Since a plurality of objects on which the test is performed within a relatively short period of time are generated under a similar process condition in general, a defect rate of each of defect types of the plurality of objects tends to have a similar value. However, due to various causes, including a cause that process conditions are not completely identical such as a partial difference in process order, there may be a difference even in a defect rate of a specific defect type of the plurality of objects on which the test is performed within the first set period of time.

In an example, the target object may be an object having a defect rate identified as a statistical outlier based on a defect rate for each of a plurality of defect types. More specifically, when the defect rate of the target defect type of the target object is determined as a statistical outlier among defect rates of the target defect type of the plurality of objects, the electronic device may identify the target object corresponding to the defect rate and the target defect type. For example, when a level of a Z-score calculated corresponding to the defect rate of the target defect type of the target object is greater than a set value (for example, "2"), the defect rate of the target defect type of the target object may be determined as a statistical outlier, but is not limited thereto.

Although not illustrated in FIG. 7, for each of the plurality of objects, obtaining first map image data in operation S210 and obtaining second map image data in operation S220 may be performed prior to operation S710. Detailed descriptions according to operation S210 and operation S220 will be omitted.

In an example, in operation S720, the electronic device (e.g., electronic device 100) may identify a plurality of candidate objects based on a target defect rate of the target defect type corresponding to the target object. For all of objects manufactured in a second set period of time (for example, one month) relatively longer than the first set period of time, performing operation S730 and operation S740 that will be described in greater detail below may be inefficient in terms of resources. Accordingly, the electronic device may identify, in advance, a plurality of candidate objects that are highly likely to have a defect pattern similar to that of the target object before performing operation S730 and operation S740. In relation to this, each of the plurality of candidate objects may be an object that has a defect rate within a set range from the defect rate of the target defect type of the target object. Here, the set range may be determined based on the defect rate. More specifically, when the defect rate is high, the set range may be relatively large like a first range (for example, ±10%), and when the defect rate is low, the set range may be relatively small like a second range (for example, +3%), but is not limited thereto.

In an example, in operation S730, the electronic device (e.g., electronic device 100) may obtain, or generate, a first vector of the target object and a second vector of each of the plurality of candidate objects generated from a trained artificial intelligence model. More specifically, the electronic device may obtain the first vector and the second vector by concatenating embedding vectors generated in units of a batch size set based on the trained artificial intelligence model.

In an example, when a plurality of patch image data extracted from map image data corresponding to the target defect type of the target object are input, the first vector may include a plurality of embedding vectors obtained from the trained artificial intelligence model. More specifically, the first vector may be a vector in a form in which the plurality of embedding vectors obtained from the trained artificial intelligence model are concatenated. That is, a length of the first vector may be calculated by multiplying a length of the embedding vector and the number of the plurality of embedding vectors. The second vector of each of the plurality of candidate objects may be generated through a similar method.

In an example, in operation S740, the electronic device (e.g., electronic device 100) may determine a similarity between the defect pattern of the target object and a defect pattern of each of the plurality of candidate objects based on a first similarity between the first vector and the second vector. Here, the first similarity may be calculated based on various similarity calculation techniques, such as cosine similarity and Euclidean distance. However, a method for calculating the first similarity is not limited to any particular similarity calculation technique. The first similarity may represent the similarity between the first vector and the second vector obtained based on the second artificial intelligence model, which is the trained artificial intelligence model. The similarity may represent the similarity between the defect pattern of the target object and the defect pattern of each of the plurality of candidate objects.

In an example, the object and the plurality of candidate objects may be separated into a plurality of areas. Since unit components included in each of the plurality of areas may be identified based on coordinate information, the electronic device may identify a defect rate of each of the plurality of areas of the target object based on information on the object. The electronic device may obtain a first defect rate vector including the defect rate of each of the plurality of areas of the target object as an element. Similarly, a plurality of second defect rate vectors including a defect rate of each of the plurality of areas of the plurality of candidate objects may be obtained as an element. Lengths of the first defect rate vector and the second defect rate vector may correspond to the total number of the plurality of areas. A second similarity may be calculated between the first defect rate vector and the plurality of second defect rate vectors. The second similarity may also be calculated based on various similarity calculation techniques just like the first similarity. The second similarity may represent a similarity between the first defect rate vector and the second defect rate vector.

In an example, the electronic device may determine the similarity between the defect pattern of the target object and the defect pattern of each of the plurality of candidate objects based on the first similarity and the second similarity. Here, the similarity may be calculated by a weighted sum of the first similarity and the second similarity. For example, a first weighted value corresponding to the first similarity may be set to be "0.8," and a second weighted value corresponding to the second similarity may be set to be "0.2," but is not limited thereto. The electronic device may determine that a defect pattern of one or more candidate objects of which the similarity is greater than a set value, among the plurality of candidate objects, is similar to the defect pattern of the target object. For example, the set value may be "0.9," but is not limited thereto.

As an object is manufactured continuously, a new defect pattern for each defect type of the object may also be continuously detected. Accordingly, the electronic device (e.g., electronic device 100) may map information on the detected new defect pattern for each defect type and information on a defect rate to be stored in a memory (e.g., memory 120). An object having a specific defect pattern of a specific defect type stored in the memory may be referred to as a representative object. The representative object may correspond to an object that has been identified as a target object. Each of the plurality of candidate objects identified in operation S720 may be the representative object having a defect rate within a set range from a defect rate of a target defect type of the target object. However, it is not limited thereto. When each of the plurality of candidate objects is not the representative object, the electronic device may further perform an operation of determining a similarity between a defect pattern of the representative object and a defect pattern of the target object. An example in which each of the plurality of identified candidate objects is the representative object will be described in greater detail below.

In an example, an electronic device (e.g., electronic device 100) may classify the defect pattern of the target object to an existing defect pattern or a new defect pattern based on the similarity between the defect pattern of the target object and the defect pattern of each of the plurality of candidate objects. As an example, when the calculated similarity is smaller than a set value (for example, "0.5"), the defect pattern of the target object may be determined as the new defect pattern. The electronic device may map information on the defect pattern of the target object and information on the defect rate, and then store the information as information on the new defect pattern in the memory. As another example, when at least partial similarities between a defect pattern of the target object and defect patterns of the plurality of candidate objects are greater than a set value, the electronic device may classify the defect pattern of the target object to a defect pattern of one candidate object among candidate objects corresponding to the at least partial similarities. The classified existing defect pattern may be a defect pattern of a candidate object having the greatest similarity from among the candidate objects corresponding to the at least partial similarities, but is not limited thereto. The electronic device may store information on the defect pattern of the target object and information on the defect rate and then store the information as information on the existing defect pattern in the memory.

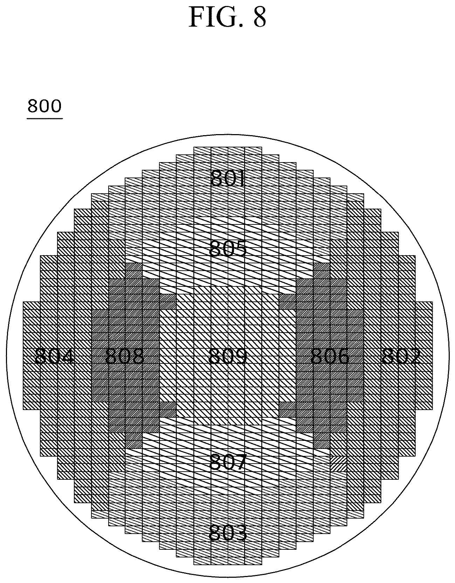

FIG. 8 illustrates an example object separated into a plurality of areas according to one or more embodiments.

Referring to FIG. 8, in a non-limiting example, an object may be separated into a plurality of areas. For example, the plurality of areas of the object may include four edge areas 801, 802, 803, and 804, four middle areas 805, 806, 807, and 808, and a central area 809. In relation to this, each of elements of a first defect rate vector may be a defect rate of one area among the four edge areas 801, 802, 803, and 804, the four middle areas 805, 806, 807, and 808, and the central area 809. Here, a length of the first defect rate vector corresponding to the object may be "9."

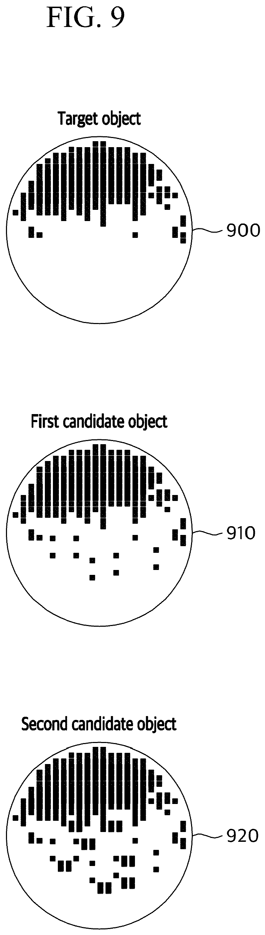

FIG. 9 illustrates example candidate objects with a defect pattern similar to a defect pattern of a target object according to one or more embodiments.

Referring to FIG. 9, in a non-limiting example, one or more candidate objects having a defect pattern in which a similarity to a defect pattern of a target object is equal to or greater than a set value may include a first candidate object 910 and a second candidate object 920. In relation to this, similarly to a defect pattern of a target object 900, a defect pattern of the first candidate object 910 may be intensively distributed at an upper part of the object. Conversely, although a defect pattern of the second candidate object 920 may be intensively distributed at the upper part of the object, similarly to the defect pattern of the target object 900, the defect is also distributed even at a lower part of the object. That is, a similarity corresponding to the first candidate object 910 may be calculated to be greater than a similarity corresponding to the second candidate object 920.

In an example, an electronic device (e.g., electronic device 100) may store, in a memory (e.g., memory 120), information on each of the one or more candidate objects having the defect pattern of which the similarity to the defect pattern of the target object is equal to or greater than the set value. More specifically, the information on candidate objects stored in the memory may include information on a similarity, identification information on candidate objects, information on a defect pattern, and information on whether the defect pattern is a new defect pattern or an existing defect pattern.

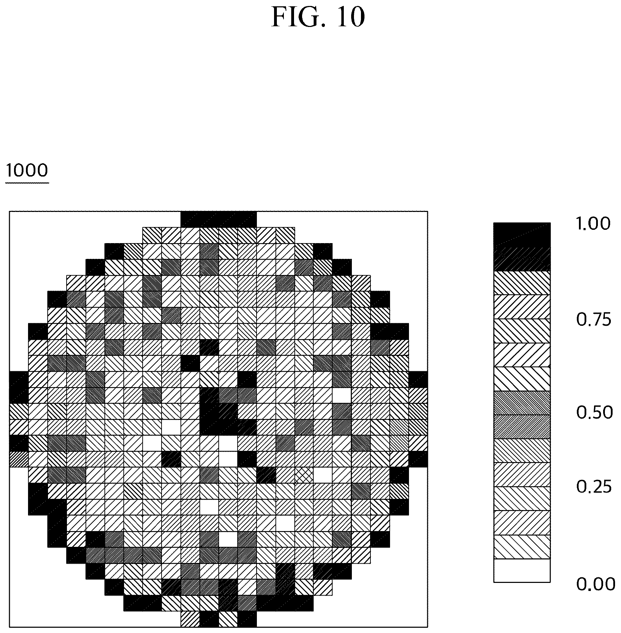

FIG. 10 illustrates example composite map image data according to one or more embodiments.

Referring to FIG. 10, in a non-limiting example, composite map image data may be generated as map image data of each of objects having an identical defect pattern is overlapped. For example, composite map image data 1000 may be generated as map image data of each of candidate objects classified as a defect pattern equal to that of a target object and map image data of the target object are overlapped. In particular, since a defect pattern with a low degree of defectiveness may be removed as the map image data is overlapped, only a main defect pattern may be represented (i.e., remain) in the composite map image data. For example, in the composite map image data 1000, a main area (for example, edge areas and a central area) of a defect pattern is emphasized. Information on the composite map image data may be stored in a memory (e.g., memory 120) with information on each of one or more candidate objects having a defect pattern of which a similarity to a defect pattern of a target object is equal to or greater than a set value.

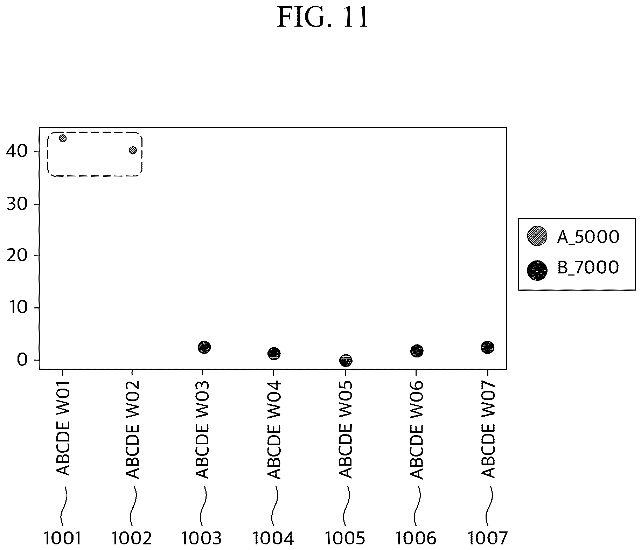

FIG. 11 illustrates an example process with detecting defect pattern causes according to one or more embodiments.

Referring to FIG. 11, in a non-limiting example, an electronic device (e.g., electronic device 100) may identify a process, which is a cause of a defect pattern, based on process information of one or more candidate objects having a similarity greater than a set value and process information of a target object. For example, the electronic device may identify a common process, identified by comparing the process information of the one or more candidate objects and the process information of the target object, as the process, which is the cause of the defect pattern. As another example, the electronic device may identify a specific process condition (for example, temperature and pressure) having a statistical difference by comparing the process information of the one or more candidate objects and the target object and process information of a normal object in which the defect pattern is not detected.

The electronic device may transmit, through a transceiver, analysis information on the defect pattern of the target object, including the process as the cause of the defect pattern and information on the specific process condition having the statistical difference, to an external electronic device. The external electronic device may provide the analysis information to a user. Accordingly, the user may easily check various analysis information including information on whether the defect pattern of the target object is an existing defect pattern or a new defect pattern, the process as the cause of the defect pattern, or the specific process condition having the statistical difference.

The electronic devices, memories, processors, neural networks, electronic device 100, one or more processors 110, memory 120, encoder 620, and decoder 640 described herein, including descriptions with respect to respect to FIGS. 1-11, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit (ALU), a digital signal processor (DSP), a microcomputer, a programmable logic controller, a field-programmable gate array (FPGA), a programmable logic array (PLU), a microprocessor, or any other device or combination of devices that is configured to respond to and execute instructions (e.g., code or coding) in a defined manner to achieve a desired result. In one example, a processor or computer includes, or is connected to, one or more memories storing the instructions or software that are executed by the processor or computer. Hardware components implemented by a processor or computer may execute the instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both, and thus while some references may be made to a singular processor or computer, such references also are intended to refer to multiple processors or computers. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing. Thus, references to a processor herein mean processing circuitry (e.g., circuitry that includes one or more processing element(s) circuits). One or more processors comprising processing circuitry also refers to each processor comprising processing circuitry, as well as some or all of the one or more processors comprising the same processing circuitry. In addition, processors(s) and controller(s), as a non-limiting example, do not mean human processing or human control, but rather, refer to hardware components as described herein, as non-limiting examples.

The methods illustrated in, and discussed with respect to, FIGS. 1-11 that perform the operations described in this application are performed by computing hardware, for example, by one or more processors or computers, implemented as described above implementing the instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations. References to a processor, or one or more processors, as a non-limiting example, configured to perform two or more operations refers to a processor or two or more processors being configured to collectively perform all of the two or more operations, as well as a configuration with the two or more processors respectively performing any corresponding one of the two or more operations (e.g., with a respective one or more processors being configured to perform each of the two or more operations, or any respective combination of one or more processors being configured to perform any respective combination of the two or more operations). Likewise, a reference to a processor-implemented method is a reference to a method that is performed by one or more processors or other processing or computing hardware of a device or system.

The instructions or software to control computing hardware, for example, one or more processors or computers, to implement the hardware components and perform the methods as described above may be written as computer programs, code segments, or other executable instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. Thus, references herein to storage media mean storage media hardware, and does not mean to transitory media, nor a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the invention is defined by the subject matter of the enclosed claims.

## Claims

1. A processor-implemented method, the method comprising:
obtaining, for each type of defect types, first map image data representing whether a plurality of unit components are defective based on information on an object including the plurality of unit components;
obtaining second map image data by preprocessing the first map image data using a denoising level determined based on a defect rate of the plurality of unit components for each of the defect types; and
training, based on input data including the second map image data, a first artificial intelligence model based on a first reconstruction loss between output data of the first artificial intelligence model and the input data.

2. The method of claim 1, wherein the obtaining of the second map image data comprises:
determining one or more of a threshold value and a size of a reference area based on the defect rate; and
preprocessing the first map image data by using one or more of the threshold value and the reference area having the determined size.

3. The method of claim 2, wherein the second map image data includes a virtual boundary line representing an area corresponding to an edge of the object.

4. The method of one of claims 1 to 3, wherein the training of the first artificial intelligence model comprises:
extracting a plurality of first patch image data from the second map image data;
generating a first embedding vector of each of the plurality of first patch image data by using an encoder included in the first artificial intelligence model, the encoder using the plurality of first patch image data as the input data; and
obtaining, as the output data, a plurality of second patch image data corresponding to the plurality of first patch image data from the first embedding vector by using a decoder included in the first artificial intelligence model.

5. The method of claim 4, wherein the obtaining of the plurality of second patch image data comprises:
generating a second embedding vector by masking a portion of the first embedding vector of each of the plurality of first patch image data based on a masking ratio determined according to the defect rate; and
reconstructing the plurality of second patch image data from the second embedding vector by using the decoder.

6. The method of claim 5, wherein the training of the first artificial intelligence model comprises:
identifying one or more third patch image data corresponding to the masked first embedding vector among the plurality of first patch image data;
identifying one or more fourth patch image data corresponding to the masked first embedding vector among the plurality of second patch image data; and
training the first artificial intelligence model to minimize the first reconstruction loss between the input data including the one or more third patch image data and the output data including the one or more fourth image data.

7. The method of one of claims 1 to 6, wherein the training of the first artificial intelligence model comprises:
extracting an encoder included in the first artificial intelligence model into a second artificial intelligence model when a second reconstruction loss calculated from the first artificial intelligence model based on test data is less than a set value.

8. The method of one of claims 1 to 7, wherein the information includes identification information on the object, inspection result information of a plurality of inspection processes performed for each of the plurality of unit components, coordinate information of the plurality of unit components, and defect information of the plurality of unit components for each of the defect types, and
wherein the defect types are determined based on the inspection result information for each of the plurality of unit components.

9. A non-transitory computer-readable storage medium storing instructions that, when executed by a processor, cause the processor to perform the method of:
identifying a target object among a plurality of objects and a target defect type of the target object based on an object defect rate of each of defect types of the plurality of objects;
identifying a plurality of candidate objects based on a target defect rate of the target defect type corresponding to the target object;
obtaining a first vector of the target object and a second vector of each of the plurality of candidate objects generated from a trained artificial intelligence model; and
determining a similarity between a defect pattern of the target object and a defect pattern of each of the plurality of candidate objects based on a first similarity between the first vector and the second vector.

10. The computer-readable storage medium of claim 9, wherein the identifying of the plurality of candidate objects comprises:
identifying the plurality of candidate objects of which a defect type is identical to the target defect type of the target object and the object defect rate is within a set range from the target defect rate of the target defect type corresponding to the target object.

11. The computer-readable storage medium of claim 9 or 10, wherein the trained artificial intelligence model, by using a plurality of patch image data extracted from map image data corresponding to the target defect type of the target object as an input, outputs the first vector, the first vector including a plurality of embedding vectors.

12. The computer-readable storage medium of one of claims 9 to 11, wherein the determining of the similarity comprises:
generating, responsive to the target object and the plurality of candidate objects being separated into a plurality of areas, a first defect rate vector that includes a defect rate of each of the plurality of areas of the target object and a plurality of second defect rate vectors that include a defect rate of each of the plurality of areas of the plurality of candidate objects; and
determining the similarity based on the first similarity and a second similarity between the first defect rate vector and the plurality of second defect rate vectors.

13. The computer-readable storage medium of claim 12, wherein the determining of the similarity comprises:
determining whether respective defect patterns of one or more candidate objects having a respective similarity value being greater than a set value among the plurality of candidate objects and the defect pattern of the target object are similar.

14. The computer-readable storage medium of claim 12 or 13, further comprising:
classifying, based on the similarity, the defect pattern of the target object to a defect pattern of any one candidate object among the plurality of candidate objects or to a new defect pattern.

15. An electronic device, comprising:
one or more processors comprising processing circuitry; and
a memory comprising one or more storage media storing instructions that, when executed individually or collectively by the one or more processors, cause the electronic device to: obtain, for each type of defect types, first map image data representing whether a plurality of unit components are defective based on information on an object including the plurality of unit components;
obtain second map image data by preprocessing the first map image data using a denoising level determined based on a defect rate of the plurality of unit components for each of defect patterns; and
train, based on input data including the second map image data, a first artificial intelligence model based on first reconstruction loss between output data of the first artificial intelligence model and the input data.
